(19) **Europäisches Patentamt / European Patent Office / Office européen des brevets**

(11) **EP 3 140 329 B2**

(12) **NEW EUROPEAN PATENT SPECIFICATION**

After opposition procedure

(45) Date of publication and mention
of the opposition decision:
**29.04.2026 Bulletin 2026/18**

(45) Mention of the grant of the patent:
**24.07.2019 Bulletin 2019/30**

(21) Application number: **15719698.1**

(22) Date of filing: **28.04.2015**

(51) International Patent Classification (IPC):
***C08F 110/06*** (2006.01)   ***C08F 210/06*** (2006.01)
***C08F 4/657*** (2006.01)

(52) Cooperative Patent Classification (CPC):
(C-Sets available)
**C08F 210/06**                          (Cont.)

(86) International application number:
**PCT/EP2015/059247**

(87) International publication number:
**WO 2015/169653 (12.11.2015 Gazette 2015/45)**

(54) **RANDOM PROPYLENE-ETHYLENE COPOLYMERS**

ZUFALLS-PROPYLEN-ETHYLEN-COPOLYMERE UND HERSTELLUNGSVERFAHREN DAFÜR

COPOLYMÈRES DE PROPYLÈNE-ÉTHYLÈNE ALÉATOIRE ET LEUR PROCÉDÉ DE
PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.05.2014 EP 14167178**
**17.04.2015 EP 15164016**

(43) Date of publication of application:
**15.03.2017 Bulletin 2017/11**

(73) Proprietor: **Basell Poliolefine Italia S.r.l.**
**20121 Milano (IT)**

(72) Inventors:
• **MASSARI, Paola**
**44122 Ferrara (IT)**
• **PIEMONTESI, Fabrizio**
**44122 Ferrara (IT)**
• **VITALE, Gianni**
**44122 Ferrara (IT)**

• **CATHELIN, Caroline**
**44122 Ferrara (IT)**
• **MORINI, Giampiero**
**44122 Ferrara (IT)**
• **CIARAFONI, Marco**
**44122 Ferrara (IT)**
• **CAVALIERI, Claudio**
**44122 Ferrara (IT)**
• **CAPUTO, Tiziana**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 1 900 764       EP-A1- 1 903 070**
**WO-A1-2004/033509    WO-A1-2007/045600**
**WO-A1-2015/169831    US-A- 6 057 413**

EP 3 140 329 B2

(52) Cooperative Patent Classification (CPC): (Cont.)

C-Sets
**C08F 10/00, C08F 4/6492;**
**C08F 10/00, C08F 4/6574;**
C08F 210/06, C08F 210/16, C08F 2500/04,
C08F 2500/12, C08F 2500/26

**Description**

FIELD OF THE INVENTION

The present disclosure relates to random propylene/ethylene copolymers which have excellent properties in terms of low content of xylene-solubles, melting temperature and optical properties. Random propylene/ethylene copolymer are especially fit for the production of films, in particular cast films.

BACKGROUND OF THE INVENTION

Propylene copolymers containing from 0.1 to 10 by weight of ethylene, in which the comonomer is randomly distributed in the polypropylene chain, are generally known as random propylene copolymers. Compared with propylene homopolymers, the said copolymers have a molecular structure which is modified by the presence of the comonomer, leading to a substantially lower degree of crystallinity therein. As a result, random copolymers have a lower melting temperature with respect to propylene homopolymers and also lower sealing temperature and a modulus of elasticity.

As a downside, the introduction of the comonomer into the polypropylene chain leads to a significant increase in the fraction of polymer which is soluble in xylene at 25°C, the said soluble polymer being mainly composed of low molecular weight chains and containing percentages of comonomer which are higher than the average content of comonomer calculated on the basis of the whole polymer. The amount of soluble fraction generally increases as the content of comonomer in the copolymer increases and, beyond defined limits, precludes the use of the copolymers in certain sectors, for example in the preparation of films for wrapping food, unless recourse is made to a burdensome stage of elimination of the soluble fraction. The presence of relevant amounts of the said fractions decreases the flowability of the polymer granules, thereby making operations such as discharging and transferring the polymer difficult and giving rise to operation problems in the polymerization plant. Moreover, the presence of the said soluble fractions in significant amounts leads, over the time, to phenomena of deterioration of the optical properties and of the organoleptic properties owed to migration of these fractions to the surface (blooming).

It is very well known in the art that random propylene copolymers with improved comonomer distribution are obtainable using single-site catalysts.

WO2007/45600 for example relates to propylene random copolymers having high melt flow rates for injection molding and melt blow applications.

The described copolymers have a melt flow rate ranging from 90 to 3000 g/10min and a distribution of molecular weight lower than 4. This material is obtained by using metallocene-based catalyst system. Even if the xylene solubles of this material is less than 2.2, the other features such as the high melt flow rate and the narrow distribution of molecular weight make this material not perfectly fit for the production of cast film.

WO2006/120190 relates to random propylene/ethylene copolymer having an ethylene content ranging from 4.5 to 7 wt% and Mw/Mn lower than 4. The copolymers described in this document shows a very low level of xylene solubles after visbreaking, however the xylene solubles of the ex reactor polymer are quite high.

US6,365,685 (WO 97/31954) relates to propylene random copolymers obtained by using a phthalate based catalyst in combination with certain 1,3-diethers as external donors. The random propylene polymers therein described are improved with respect to those obtained with the same phthalate-based ZN catalysts used in combination with silanes as external donor. However, the properties of the random copolymers still need to be improved particularly if considering that the xylene solubles content reported in the cited patent is determined by a method which comprises dissolving the whole sample at the xylene boiling point, lowering the temperature of the solution to 0°C and then let the temperature raise up until 25°C. This method as shown in the comparative examples of the present document gives rise to lower value of xylene solubles.

SUMMARY OF THE INVENTION

Now it has surprisingly been found improved propylene/ethylene copolymers, obtained by heterogeneous catalysts, having very improved comonomer distribution which allows low sealing initiation temperature, better transparency and low xylene soluble content.

The propylene ethylene copolymers of the present disclosure are as described in claim 1.

DETAILED DESCRIPTION OF THE INVENTION

The propylene ethylene copolymers of the present disclosure are characterized by the following features:

- ethylene content comprised between 1.8 and 10.0% by weight; preferably comprised between 2.1 and 7.1 wt% more preferably comprised between 2.7 wt% and 6.3 wt%; even more preferably comprised between 2.9 and 5.3 wt%;

- molecular weight distribution (MWD), expressed in terms of Mw/Mn, greater than 4.0;preferably the molecular weight distribution is lower than 10;
- the content of xylene soluble fraction (XS) and ethylene content (C2) fulfill the following relation

$$XS<(C2x2.1)-2.4$$

where:

XS = % by weight of the fraction soluble in xylene at 25°C determined according to the method given in the characterization section;
C2 = % by weight of ethylene units in the copolymer determined via NMR according to the method given in the characterization section;

Preferably the relation is:

$$XS<(C2x2.1)-2.6$$

more preferably the relation is:

$$XS<(C2x2.1)-2.8$$

Even more preferably the relation is:

$$XS<(C2x2.1)-3.0.$$

The propylene ethylene copolymer of the present disclosure is defined as containing only propylene and ethylene comonomers.

Preferably in the in the propylene/ethylene copolymer the Melt Flow Rate (MFR 230°C 2,16kg) referred to the copolymers as a reactor grade (i.e., copolymers that have not been subject to chemical or physical visbreaking) ranges from 0.5 to 75 g/10'; preferably from 2.0 to 25.0 g/10' more preferably from 3.0 to 20.0g/10'; even more preferably from 4.0 to 18.0 g/10';

Preferably in the propylene/ethylene copolymer the 2,1 propylene insertions cannot be detected via $C^{13}$ NMR according to the procedure reported in the characterizing section.

The propylene ethylene copolymer is particularly fit for the production of films, in particular cast films. The cast film obtained with the propylene ethylene polymer have particular good optical properties (in a non-nucleated form) such as haze measured on a 50 micron cast film lower than 0.40 % preferably lower than 0.30%; more preferably lower than 0.25% and low seal initiation temperature (SIT).

The difference between the melting point and the SIT is higher than 17°C; preferably higher than 18°C more preferably higher than 19°C.

The propylene ethylene copolymer herein disclosed can be prepared by a process comprising polymerizing propylene with ethylene, in the presence of a catalyst comprising the product of the reaction between:

(i) a solid catalyst component comprising Ti, Mg, Cl, and an electron donor compound characterized by the fact that it contains from 0.1 to 50%wt of Bi with respect to the total weight of said solid catalyst component;
(ii) an alkylaluminum compound and,
(iii) an electron-donor compound (external donor).

Preferably, in the catalyst component the content of Bi ranges from 0.5 to 40% more preferably from 1 to 35, especially from 2 to 25%wt and in a very particular embodiment from 2 to 20%wt.

The particles of solid component have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

In general the amount of Mg preferably ranges from 8 to 30% more preferably from 10 to 25%wt.

Generally, the amount of Ti ranges from 0.5 to 5% and more preferably from 0.7 to 3%wt.

Preferred internal electron donor compounds are selected from alkyl and aryl esters of optionally substituted aromatic polycarboxylic acids such as esters of benzoic and phthalic acids, Specific examples of such esters are n-butylphthalate, di-isobutylphthalate, di-n-octylphthalate, ethyl-benzoate and p-ethoxy ethyl-benzoate.

The Mg/Ti molar ratio is preferably equal to, or higher than, 13, preferably in the range 14-40, and more preferably from 15 to 40. Correspondingly, the Mg/donor molar ratio is preferably higher than 16 more preferably higher than 17 and usually ranging from 18 to 50.

The Bi atoms preferably derive from one or more Bi compounds not having Bi-carbon bonds. In particular the Bi compounds can be selected from Bi halides, Bi carbonate, Bi acetate, Bi nitrate, Bi oxide, Bi sulphate, Bi sulfide. Compounds in which Bi has the valence $3^+$ are preferred. Among Bi halides, preferred are Bi trichloride and Bi tribromide. The most preferred Bi compound is $BiCl_3$.

The preparation of the solid catalyst component can be carried out according to several methods.

According to one method the solid catalyst component can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0°C); the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

Several ways are available to add one or more Bi compounds in the catalyst preparation. According to the preferred option, the Bi compound(s) is/are incorporated directly into the $MgCl_2 \cdot pROH$ adduct during its preparation. In particular, the Bi compound can be added at the initial stage of adduct preparation by mixing it together with $MgCl_2$ and the alcohol. Alternatively, it can be added to the molten adduct before the emulsification step. The amount of Bi introduced ranges from 0.1 to 1 mole per mole of Mg in the adduct. Preferred Bi compound(s) to be incorporated directly into the $MgCl_2 \cdot pROH$ adduct are Bi halides and in particular is $BiCl_3$. The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums. The Al/Ti ratio is higher than 1 and is generally comprised between 50 and 2000.

Suitable external electron-donor compounds include silicon compounds, ethers, esters, amines, heterocyclic compounds and particularly 2,2,6,6-tetramethylpiperidine and ketones.

A preferred class of external donor compounds is that of silicon compounds of formula $(R_6)_a(R_7)_bSi(OR_8)_c$, where a and b are integers from 0 to 2, c is an integer from 1 to 4 and the sum (a+b+c) is 4; $R_6$, $R_7$, and $R_8$, are alkyl, cycloalkyl or aryl radicals with 1-18 carbon atoms optionally containing heteroatoms. Particularly preferred are the silicon compounds in which a is 1, b is 1, c is 2, at least one of $R_6$ and $R_7$ is selected from branched alkyl, cycloalkyl or aryl groups with 3-10 carbon atoms optionally containing heteroatoms and $R_8$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)-(2-ethylpiperidinyl)-dimethoxysilane, methyl(3,3,3-trifluoro-n-propyl)dimethoxysilane. Moreover, the silicon compounds in which a is 0, c is 3, $R_7$ is a branched alkyl or cycloalkyl group, optionally containing heteroatoms, and $R_8$ is methyl are also preferred. Examples of such preferred silicon compounds are cyclohexyltrimethoxysilane, t-butyltrimethoxysilane and thexyltrimethoxysilane.

The electron donor compound (iii) is used in such an amount to give a weight ratio between the organoaluminum compound and said electron donor compound (iii) of from 2.5 to 500, preferably from 3 to 300 and more preferably from 3.5 to 100.

The polymerization process can be carried out according to known techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa. Hydrogen is typically used as a molecular weight regulator.

The following examples are given in order to better illustrate the invention and are not intended to limit it in any way.

## EXAMPLES

### Determination of Mg, Ti

The determination of Mg and Ti content in the solid catalyst component has been carried out via inductively coupled plasma emission spectroscopy on "I.C.P Spectrometer ARL Accuris". The sample was prepared by analytically weighting, in a "Fluxy" platinum crucible", 0.1÷0.3 grams of catalyst and 2 grams of lithium metaborate/tetraborate 1/1 mixture. After addition of some drops of KI solution, the crucible is inserted in a special apparatus "Claisse Fluxy" for the complete burning. The residue is collected with a 5% v/v $HNO_3$ solution and then

### Determination of Bi

The determination of Bi content in the solid catalyst component has been carried out via inductively coupled plasma emission spectroscopy on "I.C.P Spectrometer ARL Accuris". The sample was prepared by analytically weighting in a 200 $cm^3$ volumetric flask 0.1÷0.3 grams of catalyst. After slow addition of both ca. 10 milliliters of 65% v/v $HNO_3$ solution and ca. 50 $cm^3$ of distilled water, the sample undergoes a digestion for 4÷6 hours. Then the volumetric flask is diluted to the mark with deionized water. The resulting solution is directly analyzed via ICP at the following wavelength: Bismuth, 223.06 nm.

### Determination of internal donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

### Determination of X.I.

The Xylene Soluble fraction was measured according to ISO 16152, 2005, but with the following deviations (between brakets what prescribed by the ISO 16152)

> i- The solution volume is 250 ml (200 ml)
> ii- During the precipitation stage at 25°C for 30 min, the solution, for the final 10 minutes, is kept under agitation by a magnetic stirrer (30 min, without any stirring at all)
> iii- The final drying step is done under vacuum at 70°C (100 °C)

The content of said xylene-soluble fraction is expressed as a percentage of the original 2.5 grams and then, by difference (complementary to 100), the X.I. %

### Molecular weight distribution (Mw/Mn)

Molecular weights and molecular weight distribution were measured at 150°C using a Waters Alliance GPCV/2000 instrument equipped with four mixed-bed columns PLgel Olexis having a particle size of 13 $\mu$m. The dimensions of the columns were 300 × 7.8 mm. The mobile phase used was vacuum distilled 1,2,4-trichlorobenzene (TCB) and the flow rate was kept at 1.0 ml/min. The sample solution was prepared by heating the sample under stirring at 150°C in TCB for one to two hours. The concentration was 1 mg/ml. To prevent degradation, 0.1 g/l of 2,6-di-*tert*-butyl-*p*-cresol were added. 300 $\mu$l (nominal value) of solution were injected into the column set. A calibration curve was obtained using 10 polystyrene standard samples (EasiCal kit by Agilent) with molecular weights in the range from 580 to 7 500 000. It was assumed that the $K$ values of the Mark-Houwink relationship were:

> $K$ = 1.21 × 10$^{-4}$ dl/g and $\alpha$ = 0.706 for the polystyrene standards,
> $K$ = 1.90 × 10$^{-4}$ dl/g and $\alpha$ = 0.725 for the experimental samples.

A third order polynomial fit was used for interpolate the experimental data and obtain the calibration curve. Data acquisition and processing was done by using Waters Empowers 3 Chromatography Data Software with GPC option.

**Melt flow rate (MIL)**

The melt flow rate MIL of the polymer was determined according to ISO 1133 (230°C, 2.16 Kg).

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\, T_{\beta\beta}/S \quad PPE = 100\, T_{\beta\delta}/S \quad EPE = 100\, T_{\delta\delta}/S$$

$$PEP = 100\, S_{\beta\beta}/S \quad PEE = 100\, S_{\beta\delta}/S \quad EEE = 100\, (0.25\, S_{\gamma\delta}+0.5\, S_{\delta\delta})/S$$

$$S = T_{\beta\beta} + T_{\beta\delta} + T_{\delta\delta} + S_{\beta\beta} + S_{\beta\delta} + 0.25\, S_{\gamma\delta} + 0.5\, S_{\delta\delta}$$

The molar percentage of ethylene content was evaluated using the following equation:

E% mol = 100 * [PEP+PEE+EEE]The weight percentage of ethylene content was evaluated using the following equation:

$$E\%\ wt. = \frac{100 * E\%\ mol * MW_E}{E\%\ mol * MW_E + P\%\ mol * MW_P}$$

where P% mol is the molar percentage of propylene content, while $MW_E$ and $MW_P$ are the molecular weights of ethylene and propylene, respectively.

The product of reactivity ratio $r_1 r_2$ was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP mmT$_{\beta\beta}$ (28.90-29.65 ppm) and the whole T$_{\beta\beta}$ (29.80-28.37 ppm)

<u>Determination of the regioinvertions:</u> determined by means of C$^{13}$-NMR according to the methodology described by J.C. Randall in "Polymer sequence determination Carbon 13 NMR method", Academic Press 1977. The content of regioinvertions is calculated on the basis of the relative concentration of $S_{\alpha\beta} + S_{\beta\beta}$ methylene sequences.

**Melting temperature via Differential Scanning Calorimetry (DSC)**

The melting points of the polymers (Tm) were measured by Differential Scanning Calorimetry (D.S.C.) on a Perkin Elmer DSC-1 calorimeter, previously calibrated against indium melting points, and according to ISO 11357-1, 2009 and 11357-3, 2011, at 20°C/min. The weight of the samples in every DSC crucible was kept at 6.0 ± 0.5 mg.

In order to obtain the melting point, the weighted sample was sealed into aluminium pans and heated to 200°C at 20°C/minute. The sample was kept at 200°C for 2 minutes to allow a complete melting of all the crystallites, then cooled to 5°C at 20°C/minute. After standing 2 minutes at 5°C, the sample was heated for the second run time to 200°C at 20°C/min. In this second heating run, the peak temperature (Tp,m) was taken as the melting temperature.

**Seal Initiation Temperature (SIT)**

**Preparation of the film specimens**

Some films with a thickness of 50 $\mu$m are prepared by extruding each test composition ina a single screw Collin extruder (length/diameter ratio of screw 1:25) at a film drawing speed of 7 m/min and a melt temperature do 210-250 °C. Each resulting film is superimposed on a 1000 $\mu$m thick film of a propylene homopolymer having a xylene insoluble fraction of 97 wt% and a MFR L of 2 g/10 min. The superimposed films are bonded to each other in a Carver press at 200°C under a 9000 kg load, which is maintained for 5 minutes. The resulting laminates are stretched longitudinally and transversally, i.e. biaxially, by a factor 6 with a TOM Long film stretcher at 150°C, thus obtaining a 20 $\mu$m thick film (18 $\mu$m homopolymer+2 $\mu$m test). 2x5 cm specimens are cut from the films.

**Determination of the SIT.**

For each test two of the above specimens are superimposed in alignment, the adjacent layers being layers of the particular test composition. The superimposed specimens are sealed along one of the 2 cm sides with a Brugger Feinmechanik Sealer, model HSG-ETK 745. Sealing time is 5 seconds at a pressure of 0.1 N/mm$^2$. The sealing temperature is increased of 2°C for each seal, starting from about 10 °C less than the melting temperature of the test composition. The sealed samples are left to cool and then their unsealed ends are attached to an Instron machine where they are tested at a traction speed of 50 mm/min.

The SIT. is the minimum sealing temperature at which the seal does not break when a load of at least 2 Newtons is applied in the said test conditions.

**Determination of the Haze**

50 $\mu$m film speciments prepared as described above for the SIT measure have been used. The haze value is measured using a Gardner photometric unit connected to a Hazemeter type UX-10 or an equivalent instrument having G.E. 1209 light source with filter "C". Reference samples of known haze are used for calibrating the instrument.

**Procedure for the preparation of the spherical adduct**

Microspheroidal $MgCl_2 \cdot pC_2H_5OH$ adduct was prepared according to the method described in Comparative Example 5 of WO98/44009, with the difference that $BiCl_3$ in a powder form and in the amount of 3 mol% with respect to the magnesium has been added before feeding of the oil. The adduct contains 11.2 wt % of Mg.

**Procedure for the preparation of the solid catalyst component**

Into a 300 L jacketed reactor, equipped with mechanical stirrer, condenser and thermocouple 200 L of $TiCl_4$ were introduced at room temperature under nitrogen atmosphere. After cooling to 0°C, while stirring, diisobutylphthalate and 8 kg of the spherical adduct (prepared as described above) were sequentially added . The amount of charged internal donor was such to meet a Mg/donor molar ratio of 8. The temperature was raised to 100°C and maintained for 1 hours. Thereafter, stirring was stopped, the solid product was allowed to settle and the supernatant liquid was siphoned off at 100°C. After the supernatant was removed, additional fresh $TiCl_4$ was added to reach the initial liquid volume again. The mixture was then heated at 120°C and kept at this temperature for 1/2 hour. Stirring was stopped again, the solid was allowed to settle and the supernatant liquid was siphoned off at 120 °C. The treatment with $TiCl_4$ at 120 °C was then repeated again with the same procedure as before but the treatment time was decreased to 15 minutes. The solid was washed with anhydrous hexane six times in temperature gradient down to 60°C and one time at room temperature. The obtained solid was then dried under vacuum.

**Propylene/Ethylene copolymerization Examples 1-2**

**Prepolymerization treatment**

Before introducing it into the polymerization reactors, the solid catalyst component described above have been contacted with triethyl aluminum (TEAL) and methylcyclohexyldimethoxysilane (C donor) in a ratio reported on table 1. Then the resulting mixture is subjected to prepolymerization by maintaining it in suspension in liquid propylene at 20 °C for about 5 minutes before introducing it into the polymerization reactor.

**Polymerization**

Copolymer are prepared by polymerising propylene and ethylene in the presence of a catalyst under continuous conditions in a plant comprising a polymerisation apparatus as described in EP 1 012 195. The catalyst is sent to the polymerisation apparatus that comprises two interconnected cylindrical reactors, riser and downcomer. Fast fluidisation conditions are established in the riser by recycling gas from the gas-solid separator. In examples 1-2 no barrier feed has been used. The powder is continuously discharged and dried under a nitrogen flow. The main polymerization conditions are reported in Table1. The characterization of the polymer is reported on table 4

Table 1

|  |  | Ex. 1 | Ex 2 a |
|---|---|---|---|
| catalyst feed | g/h | 10 | 10 |
| catalyst/TEAL | g/g | 6 | 6 |
| TEAL/C donor | g/g | 5 | 3 |
| Polymerisation temperature | °C | 75 | 70 |
| Pressure | Bar-g | 28 | 27 |
| H2/C3 | mol/mol | 0.019 | 0.031 |
| **C2/C2+C3** | mol/mol | **0.023** | **0.028** |
| residence time | min | 66 | 79 |
| **C2=ethylene; C3=propylene; H2=hydrogen** | | | |

**Comparative Examples 3-5**

Comparative examples 3-5 are the repetition of examples 1, 3 and 4 of US6,365,685 in which the XS has been determined according to the method given in the above characterization section. The results are reported in table 2

Table 2

| comparative example | 3 | 4 | 5 |
|---|---|---|---|
| C2 wt% | 2.3 | 4 | 6 |
| Xs wt% | 2.8 | 6.4 | 14.0 |
| C2x2.1-2.4 | 2.4 | 6.0 | 10.2 |

**Comparative example 6**

**Procedure for the preparation of the spherical adduct**

Microspheroidal $MgCl_2 \cdot pC_2H_5OH$ adduct was prepared according to the method described in Comparative Example 5 of WO98/440091. The adduct contains 11.2 wt % of Mg.

**Procedure for the preparation of the solid catalyst component**

The solid catalyst component has been prepared according to the method described above.

**Polymerization**

Prepolymerization treatment

Before introducing it into the polymerization reactors, the solid catalyst component described above have been contacted with triethyl aluminum (TEAL) and methylcyclohexyldimethoxysilane (C donor) in the ratio reported on table 1. Then the resulting mixture is subjected to prepolymerization by maintaining it in suspension in liquid propylene at 20 °C for about 5 minutes before introducing it into the polymerization reactor.

The polymerization run is conducted in continuous mode in a series of two reactors equipped with devices to transfer the product from one reactor to the one immediately next to it. The two reactors are loop liquid phase reactors. Hydrogen is used as molecular weight regulator. The gas phase (propylene, ethylene and hydrogen) is continuously analyzed via gas-chromatography. The polymerization conditions are reported in table 3. The characterization of the polymer is reported on table 4

**Table 3**

| Loop reactor in liquid phase | |
|---|---|
| catalyst feed g/h | 10 |
| catalyst/TEAL g/g | 6 |
| TEAL/C donor | 3 |
| Temperature, °C | 67 |
| Pressure, bar | 34 |
| Residence time, min | 81 |
| $H_2$ feed mol ppm | 1500 |
| C2 feed (kg/h) | 2.3 |
| C2-loop wt% | 3.3 |
| Xylene Solubles % | 6.2 |
| **C2=ethylene; C3=propylene; H2=hydrogen** | |

**Table 4**

| Ex | | 1 | 2 | comp ex 6 |
|---|---|---|---|---|
| MFR | g/10' | 13,2 | 9,3 | 11.6 |
| C2 | % | 3,0 | 4,0 | 3,3 |
| XS | % | 3,2 | 5,2 | 6.2 |
| Mw/Mn | | 4.1 | 4.4 | >4.0 |
| C2x2.1-2.4 | | 3.9 | 6.0 | 4.53 |
| Tm | °C | 144,1 | 139,1 | 144.0 |
| Characterization CAST film 50 micron | | | | |
| Haze | % | 0,19 | 0,14 | 0.19 |
| SIT | °C | 123 | 118 | 124 |

From table 4 clearly results that the film obtained with the random compolymer according to the invention show a better haze and an higher difference between the melting point and the SIT

**Claims**

1. A propylene ethylene copolymer **characterized by** the following features:

- ethylene content of between 1.8 and 10.0% by weight determined via NMR according to the method reported in the specification;

difference between the melting point measured via DSC with the method reported in the specification and SIT, measured according to the method reported in the specification, higher than 17°C;
- molecular weight distribution (MWD), expressed in terms of Mw/Mn, greater than 4.0;
- the content of xylene soluble fraction (XS) and ethylene content (C2) fulfill the following relation

$$XS<(C2 \times 2.1)-2.4$$

where:

XS = % by weight of the fraction soluble in xylene at 25°C;
C2 = % by weight of ethylene units in the copolymer determined via NMR
Wherein
the Xylene Soluble fraction at 25°C was measured according to ISO 16152, 2005, but with the following deviations

i- the solution volume is 250 ml;
ii- during the precipitation stage at 25°C for 30 min, the solution, for the final 10 minutes, is kept under agitation by a magnetic stirrer;
iii- the final drying step is done under vacuum at 70°C.

2. The propylene ethylene copolymer according to claim 1 wherein the ethylene content is comprised between 2.1 and 7.1 wt%

3. The propylene ethylene copolymer according to claims 1 or 2 wherein the ethylene content is comprised between 2.7 and 6.3 wt%

4. The propylene ethylene copolymer according to anyone of claims 1-3 wherein the Melt Flow Rate (MFR 230°C 2,16kg) referred to the copolymers as a reactor grade ranges from 0.5 to 75 g/10'

5. The propylene ethylene copolymer according to anyone of claims 1-4 wherein the Melt Flow Rate (MFR 230°C 2,16kg) referred to the copolymers as a reactor grade ranges from 2.0 to 25.0 g/10'

6. The propylene ethylene copolymer according to anyone of claims 1-5 wherein the content of xylene soluble fraction (XS) and ethylene content (C2) fulfill the following relation:

$$XS<(C2 \times 2.1)-2.6$$

7. A cast film comprising the propylene /ethylene copolymer of claims 1-6

**Patentansprüche**

1. Ein Propylen-Ethylen-Copolymer, **gekennzeichnet durch** die folgenden Merkmale:

- Ethylengehalt zwischen 1,8 und 10,0 Gew.-%, bestimmt mittels NMR gemäß dem in der Beschreibung angegebenen Verfahren;
Unterschied zwischen dem mittels DSC nach dem in der Beschreibung angegebenen Verfahren gemessenen Schmelzpunkt und dem nach dem in der Beschreibung angegebenen Verfahren gemessenen SIT größer als 17 °C;
- Molekulargewichtsverteilung (MWD), ausgedrückt als Mw/Mn, größer als 4,0;
- Der Gehalt an xylollöslicher Fraktion (XS) und der Ethylengehalt (C2) erfüllen die folgende Beziehung

$$XS<(C2 \times 2.1)-2.4$$

wobei:

XS = Gewichtsprozent der bei 25 °C in Xylol löslichen Fraktion;
C2 = Gewichtsprozent der Ethyleneinheiten im Copolymer, bestimmt mittels NMR
wobei
die bei 25 °C in Xylol lösliche Fraktion gemäß ISO 16152, 2005 gemessen wurde, jedoch mit den folgenden Abweichungen

    i- das Lösungsvolumen beträgt 250 ml;
    ii- während der Ausfällungsphase bei 25 °C für 30 Minuten wird die Lösung in den letzten 10 Minuten durch einen Magnetrührer unter Rühren gehalten;
    iii- Der abschließende Trocknungsschritt erfolgt unter Vakuum bei 70 °C.

2. Das Propylen-Ethylen-Copolymer gemäß Anspruch 1, wobei der Ethylengehalt zwischen 2,1 und 7,1 Gew.-% liegt.

3. Propylen-Ethylen-Copolymer gemäß Anspruch 1 oder 2, wobei der Ethylengehalt zwischen 2,7 und 6,3 Gew.-% liegt.

4. Propylen-Ethylen-Copolymer gemäß einem der Ansprüche 1 bis 3, wobei die Schmelzflussrate Fließrate (MFR 230 °C 2,16 kg) der Copolymere als Reaktorqualität zwischen 0,5 und 75 g/10' liegt.

5. Das Propylen-Ethylen-Copolymer gemäß einem der Ansprüche 1 bis 4, wobei die Fließrate (MFR 230 °C 2,16 kg) der Copolymere als Reaktorqualität zwischen 2,0 und 25,0 g/10' liegt.

6. Das Propylen-Ethylen-Copolymer gemäß einem der Ansprüche 1 bis 5, wobei der Gehalt der xylollöslichen Fraktion (XS) und der Ethylengehalt (C2) die folgende Beziehung erfüllen:

$$XS < (C2 \times 2.1) - 2.6$$

7. Gießfolie, umfassend das Propylen/Ethylen-Copolymer nach den Ansprüchen 1 bis 6.

## Revendications

1. Copolymère de propylène-éthylène **caractérisé par** les caractéristiques suivantes :

    - teneur en éthylène comprise entre 1,8 et 10,0 % en poids, déterminée par RMN selon la méthode décrite dans la spécification ;
    différence entre le point de fusion mesuré par DSC selon la méthode décrite dans la spécification et le SIT, mesuré selon la méthode décrite dans la spécification, supérieure à 17 °C ;
    - une distribution des poids moléculaires (MWD), exprimée en termes de Mw/Mn, supérieure à 4,0 ;
    - la teneur en fraction soluble dans le xylène (XS) et la teneur en éthylène (C2) satisfaisant à la relation suivante

$$XS < (C2 \times 2.1) - 2.4$$

où :

    XS = % en poids de la fraction soluble dans le xylène à 25 °C ;
    C2 = % en poids des motifs d'éthylène dans le copolymère déterminé par RMN
    Où
    la fraction soluble dans le xylène à 25 °C a été mesurée conformément à la norme ISO 16152, 2005, mais avec les écarts suivants

    i- le volume de la solution est de 250 ml ;
    ii- pendant la phase de précipitation à 25 °C pendant 30 minutes, la solution est maintenue sous agitation par un agitateur magnétique pendant les 10 dernières minutes ;
    iii- l'étape finale de séchage est effectuée sous vide à 70 °C.

2. Copolymère de propylène-éthylène selon la revendication 1, dans lequel la teneur en éthylène est comprise entre 2,1 et 7,1 % en poids.

3. Copolymère de propylène-éthylène selon les revendications 1 ou 2, dans lequel la teneur en éthylène est comprise entre 2,7 et 6,3 % en poids.

4. Copolymère de propylène-éthylène selon l'une quelconque des revendications 1 à 3 dans lequel l'indice de fluidité à chaud (MFR 230 °C 2,16 kg) par rapport aux copolymères en tant que qualité de réacteur est comprise entre 0,5 et 75 g/10'.

5. Copolymère de propylène-éthylène selon l'une quelconque des revendications 1 à 4, dans lequel l'indice de fluidité à chaud (MFR 230 °C 2,16 kg) par rapport aux copolymères en tant que qualité de réacteur est comprise entre 2,0 et 25,0 g/10'.

6. Copolymère de propylène-éthylène selon l'une quelconque des revendications 1 à 5, dans lequel la teneur de la fraction soluble dans le xylène (XS) et la teneur en éthylène (C2) satisfont à la relation suivante :

$$XS < (C2 \times 2.1) - 2.6$$

7. Film coulé comprenant le copolymère de propylène/éthylène des revendications 1 à 6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200745600 A
- WO 2006120190 A
- US 6365685 B
- WO 9731954 A
- US 4399054 A
- US 4469648 A
- WO 9844009 A
- EP 1012195 A
- WO 98440091 A


**Non-patent literature cited in the description**

- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with δ-titanium trichloride-diethylaluminum chloride. *Macromolecules*, 1982, vol. 15, 1150
- **C.J. CARMAN** ; **R.A. HARRINGTON** ; **C.E. WILKES**. *Macromolecules*, 1977, vol. 10, 536
- **J.C. RANDALL**. Polymer sequence determination Carbon 13 NMR method. Academic Press, 1977